# EUROPÄISCHE PATENTSCHRIFT

(11) **EP 2 649 298 B1**
(45) Veröffentlichungstag und Bekanntmachung des Hinweises auf die Patenterteilung: **21.06.2017**
(21) Anmeldenummer: 11788385.0
(22) Anmeldetag: 28.11.2011
(51) Int. Cl.: F02N 11/08, H02J 7/14, B60R 16/03

(54) **KRAFTFAHRZEUGBORDNETZ UND VERFAHREN ZUM BETREIBEN EINES KRAFTFAHRZEUGBORDNETZES**
MOTOR VEHICLE ELECTRICAL SYSTEM AND METHOD FOR OPERATING A MOTOR VEHICLE ELECTRICAL SYSTEM
RÉSEAU DE BORD D'UN VÉHICULE À MOTEUR, ET PROCÉDÉ POUR FAIRE FONCTIONNER UN RÉSEAU DE BORD D'UN VÉHICULE À MOTEUR

(30) Priorität: 11.12.2010 DE 102010054191
(43) Veröffentlichungstag der Anmeldung: 16.10.2013
(73) Patentinhaber: Volkswagen Aktiengesellschaft, 38436 Wolfsburg (DE)
(72) Erfinder: KLINKIG, Andreas, 38162 Cremlingen (DE); SCHWIEGER, Stephan, 38102 Braunschweig (DE); FLEISCHER, Rainer, 38444 Wolfsburg (DE); GÜNTHER, Torsten, 38165 Lehre (DE)
(86) Internationale Anmeldenummer: PCT/EP2011/005962
(87) Internationale Veröffentlichungsnummer: WO 2012/076123

(56) Entgegenhaltungen:
- DE-A1- 10 322 875
- DE-A1-102007 026 164
- DE-A1-102008 054 885
- DE-A1-102009 029 335
- DE-A1-102010 014 104

## Beschreibung

Die Erfindung betrifft ein Kraftfahrzeugbordnetz und ein Verfahren zum Betreiben eines Kraftfahrzeugbordnetzes.

Moderne Kraftfahrzeuge werden augrund der Problematik des CO₂-Ausstoßes im Leerlauf. zunehmend mit einer Start-Stopp-Funktion ausgestattet. Bei einer Start-Stopp-Funktion wird der Motor z. B. beim Anhalten des Fahrzeuges an einer Ampel ausgeschaltet, um Kraftstoff zu sparen und CO₂-Emissionen zu reduzieren. Zum Weiterfahren wird der Motor über den Starter wieder gestartet. Da der Starter zum Losreißen des Motors bis zu 800 A Strom zieht, fällt am Innenwiderstand der Fahrzeugbatterie eine Spannung von bis zu 6 V ab. Die verfügbare Klemmspannung im Bordnetz fällt also kurzzeitig auf 12 V - 6 V = 6 V ab. Neben dem Start-Stopp-Betrieb an Ampeln ist es auch bereits bekannt, den Motor (Verbrennungskraftmaschine) auch bei fahrendem Kraftfahrzeug bei Nichtgebrauch ausschalten zu können ("Freilauf Motor aus"; "Start-Stopp on the move"). Auf jeden Fall ist ein Wiederstarten des Kraftfahrzeuges zu gewährleisten.

Aus der DE 10 2008 054 885 A1 ist eine Vorrichtung zum Steuern einer Energieversorgung eines Bordnetzes eine Fahrzeuges bekannt, an das Verbraucher anschließbar sind, umfassend einen ersten Energiespeicher zum Bereitstellen von elektrischer Energie an einem Starter, einen Generator zum Erzeugen einer Generatorspannung und ein erstes steuerbares Schaltelement, das zwischen dem ersten Energiespeicher und dem Generator vorgesehen ist, und das derart ausgebildet ist, dass es im Betrieb des Fahrzeuges einen Stromfluss nur in eine Richtung von dem ersten Energiespeicher zu dem Generator zulässt. Das Schaltelement kann dabei auch noch einen weiteren Schaltzustand aufweisen, bei dem sich das Schaltelement wie ein Leiter verhält. Vorzugsweise handelt es sich bei dem steuerbaren Schaltelement um einen Feldeffekt-Transistor, insbesondere einen MOSFET. Da sich Feldeffekt-Transistoren mit geringen Gate-Spannungen und minimaler Zeitverzögerung schalten lassen, kann somit schnell auf Änderungen des Stromflusses über das steuerbare Schaltelement oder starken Spannungsfluktuationen im Bordnetz reagiert werden. Beispielsweise kann ein Feldeffekt-Transistor oder parallel geschaltete Feldeffekt-Transistoren so angeordnet werden, dass die Durchlassrichtung seiner intrinsischen Diode oder Dioden der Richtung von dem ersten Energiespeicher zu dem Generator entspricht. Somit ist sichergestellt, dass, wenn der Transistor gesperrt ist, kein Stromfluss von dem Generator zu dem ersten Energiespeicher erfolgen kann. Andererseits kann auch bei gesperrtem Transistor ein Teil des von dem ersten Energiespeicher zu dem Bordnetz fließenden Stroms durch die intrinsischen Dioden der Feldeffekt-Transistoren fließen. Weiter umfasst die Vorrichtung einen weiteren Energiespeicher zum Bereitstellen von elektrischer Energie an die Verbraucher, der derart angeordnet ist, dass das erste steuerbare Schaltelement zwischen einerseits dem ersten Energiespeicher und andererseits dem Generator und dem weiteren Energiespeicher angeordnet ist. Weiter ist eine Ladeschaltung vorgesehen, wobei die Ladeschaltung im Betrieb des Fahrzeugs derart ausgebildet ist, dass der erste Energiespeicher auf eine Spannung UE1 aufgeladen wird, die gleich oder größer als die Spannung des zweiten Energiespeichers UE2 ist und kleiner ist als die Spannung des Generators. Der erste Energiespeicher ist vorzugsweise als Doppelschicht-Kondensator und der zweite Energiespeicher als Batterie ausgebildet. Der erste Energiespeicher liefert elektrische Energie an den Starter für einen Warmstart und/oder dämpft Spannungsfluktuationen durch die Verbraucher, wobei der zweite Energiespeicher bei einem Kaltstart elektrische Energie für den Starter bereitstellt.

Aus der DE 10 2007 026 164 A1 bzw. DE 103 59 486 A1 sind ebenfalls Kraftfährzeugbordnetze bekannt, wo die Startenergie eines Starters durch Doppelschicht-Kondensatoren zur Verfügung gestellt wird.

Aus der DE 103 22 875 A1 ist eine Anordnung zur Spannungsversorgung mehrerer Verbraucher eines Kraftfahrzeugs bekannt, mit einem mindestens zwei Energiespeicher umfassenden Bordnetz, von denen ein erster Energiespeicher in einem Starterteilkreis mit einem Starter zum Anlassen eines Motors verbunden ist und von denen ein zweiter Energiespeicher in einem Verbraucherteilkreis mit den Verbrauchern verbunden ist. Dabei ist ein Koppelelement vorgesehen, über das der Starterteilkreis mit dem Verbraucherteilkreis verbindbar ist. Des Weiteren existieren weitere Koppelelemente, über die jeweils ein sicherheitsrelevanter Verbraucher mit dem Starterteilkreis verbindbar ist. Das Koppelelement zur Verbindung des Starterteilkreises mit dem Verbraucherteilkreis ist dabei beispielsweise ein DC/DC-Wandler und/oder ein Schalter.

Der Erfindung liegt das technische Problem zugrunde ein gattungsgemäßes Kraftfahrzeugbordnetz hinsichtlich der Spannungsstabilität zu verbessern sowie ein Verfahren zum Betreiben eines solchen Kraftfahrzeugbordnetzes zur Verfügung zu stellen.

Die Lösung des technischen Problems ergibt sich durch die Gegenstände mit den Merkmalen der Patentansprüche 1 und 10. Weitere vorteilhafte Ausgestaltungen der Erfindung ergeben sich aus den Unteransprüchen.

Hierzu umfasst das Kraftfahrzeugbordnetz einen Starter und einen ersten Energiespeicher, die in einem ersten Bereich des Kraftfahrzeugbordnetzes angeordnet sind, und einen Generator und einen zweiten Energiespeicher, die in einem zweiten Bereich des Kraftfahrzeugbordnetzes angeordnet sind, wobei zwischen dem ersten und dem zweiten Bereich des Kraftfahrzeugbordnetzes ein Schaltelement angeordnet ist, das mindestens zwei Schaltzustände aufweist, wobei in einem ersten Schaltzustand ein Stromfluss nur in Richtung vom ersten Bereich zum zweiten Bereich möglich ist und in einem zweiten Schaltzustand der erste und zweite Bereich miteinander durchverbunden sind, wobei der zweite Energiespeicher über einen DC/DC-Wandler mit dem Generator verbunden ist, wobei über ein zweites Schaltelement der Starter direkt mit dem zweiten Energiespeicher verbunden ist. Durch den DC/DC-Wandler kann ein sehr geregeltes Lademanagement vorgenommen werden, so dass der zweite Energiespeicher sehr einfach auf das gewählte Spannungsniveau geladen werden kann. Umgekehrt kann der zweite Energiespeicher mittels des DC/DC-Wandlers in Startphasen die Bordnetzspannung für die Bordnetzverbraucher sehr stabil halten. Durch das zweite Schaltelement ist es nun zusätzlich möglich, den zweiten Energiespeicher direkt mit dem Starter zu verbinden, sodass der DC/DC-Wandler nicht auf die hohen Starterströme ausgelegt werden muss, was Kosten reduziert.

In einer Ausführungsform ist eine Sollspannung des zweiten Energiespeichers größer als eine Sollspannung des Generators und des ersten Energiespeichers, wobei über das zweite Schaltelement der Starter wahlweise mit dem ersten Schaltelement oder direkt mit dem zweiten Energiespeicher verbunden ist. Durch die höhere Spannung des zweiten Energiespeichers kann mehr Energie gespeichert werden, was sowohl die Wiederstartfähigkeit erhöht als auch die Spannungsstabilität des Bordnetzes. Der DC/DC-Wandler transformiert dabei die Spannung vom zweiten Energiespeicher zu den Bordnetzverbrauchern herunter. Durch das wahlweise Verbinden des zweiten Schaltelements, das als Umschalter arbeitet, wird verhindert, dass die höhere Spannung des zweiten Energiespeichers über das erste Schaltelement Rückwirkungen auf den zweiten Bereich haben kann.

In einer alternativen Ausführungsform ist die Sollspannung des zweiten Energiespeichers kleiner oder gleich als eine Sollspannung des Generators und des ersten Energiespeichers, wobei über ein zweites Schaltelement der zweite Energiespeicher mit dem Starter verbunden ist. In diesem Fall kann das zweite Schaltelement als einfacher Einschalter ausgebildet sein, da die Diode des ersten Schaltelements stets sperrt, da die Spannung über dem DC/DC-Wandler hochtransformiert wird, so däss die direkt an dem Starter anliegende Spannung des zweiten Energiespeichers stets kleiner als die Spannung an den Bordnetzverbrauchern im zweiten Bereich ist.

In einer bevorzugten Ausführungsform ist der zweite Energiespeicher als mindestens ein Kondensator, weiter vorzugsweise Doppelschicht-Kondensator ausgebildet. Dabei kann auch vorgesehen sein, dass der Energiespeicher als Kondensator-Pack ausgebildet ist, wobei jeweils mehrere Kondensatoren in Reihe und diese Reihenschaltungen parallel geschaltet sind. Es ist jedoch auch möglich, den zweiten Energiespeicher als Batterie auszubilden.

Der erste Energiespeicher ist vorzugsweise als Batterie ausgebildet, die ggf. aus mehreren Batteriezellen zusammengesetzt ist. Prinzipiell kann der erste Energiespeicher aus Kondensatoren gebildet werden.

In einer weiteren Ausführungsform ist das erste Schaltelement als MOSFET ausgebildet.

In einer weiteren Ausführungsform ist dem ersten Energiespeicher ein Diagnosemodul zugeordnet, in dessen Abhängigkeit das erste und/oder zweite Schaltelement ansteuerbar ist. Das Diagnosemodul kann beispielsweise den Strom aus dem Energiespeicher erfassen und/oder den SOC (State of Charge) und/oder SOH (State of Health) ermitteln. Erkennt dann das Diagnosemodul einen Defekt (z. B. mangelnder Ladezustand oder Leitungsabriss zwischen den Batteriezellen), so wird der zweite Energiespeicher mit dem Starter verbunden. Ebenso kann das Diagnosemodul den ersten und zweiten Bereich über das erste Schaltelement durchverbinden, falls der erste Energiespeicher durch den Generator geladen werden muss. Das Diagnosemodul kann dabei die Schaltelemente direkt schalten oder seine Daten einem übergeordneten Steuergerät zur Verfügung stellen.

In einer weiteren Ausführungsform ist das zweite Schaltelement als galvanisch trennendes Schaltelement ausgebildet, um so die Rückwirkungen auf das Bordnetz sicher auszuschließen. Beispielsweise ist das zweite Schaltelement als Leistungs-Relais ausgebildet.

In einer weiteren Ausführungsform ist das Kraftfahrzeugbordnetz mit einem Steuergerät ausgebildet, mittels dessen eine Start-Stopp-Automatik ausführbar ist. Beispielsweise kann die Start-Stopp-Automatik in ein Motorsteuergerät integriert werden. Vorzugsweise greift dabei die Start-Stopp-Automatik auch auf die Daten des Diagnosemoduls zu, sodass beispielsweise die Start-Stopp-Automatik bei schlechtem Ladezustand des ersten Energiespeichers deaktiviert wird.

Das Verfahren zum Betreiben eines zuvor beschriebenen Kraftfahrzeugbordnetzes ist dadurch gekennzeichnet, däss bei einem Defekt des ersten Energiespeichers mittels des zweiten Schaltelements der Starter direkt mit dem zweiten Energiespeicher verbunden wird und die Startenergie durch den zweiten Energiespeicher geliefert wird.

In einer weiteren Ausführungsform wird beim Starten aus dem ersten Energiespeicher das erste Schaltelement in den ersten Schaltzustand geschaltet. Dadurch ist das Bordnetz vom Starter entkoppelt und Spannungseinbrüche im Bordnetz werden vermieden.

In einer weiteren Ausführungsform wird zum Laden des ersten Energiespeichers durch den erregten Generator das erste Schaltelement in den zweiten Schaltzustand geschaltet.

Die Erfindung wird nachfolgend anhand eines bevorzugten Ausführungsbeispieles näher erläutert. Die Fig. zeigen:
- Fig. 1: ein schematisches Blockschaltbild eines Kraftfahrzeugbordnetzes und
- Fig. 2: ein schematisches Blockschaltbild eines Kraftfahrzeugbordnetzes in einer alternativen Ausführungsform.

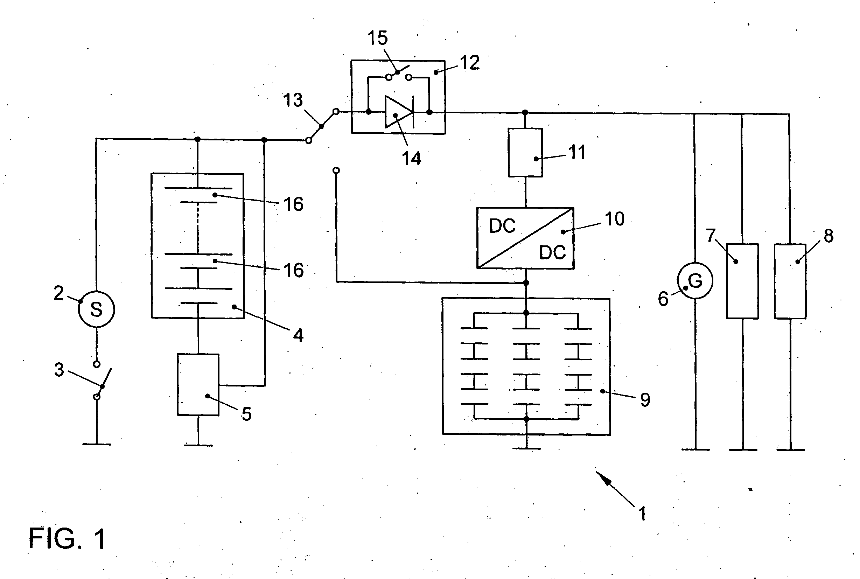

Das Kraftfahrzeugbordnetz 1 gemäß Fig. 1 umfasst einen Starter 2, einen Starterschalter 3, einen ersten Energiespeicher 4 und ein Diagnosemodul 5, die jeweils in einem ersten Bereich des Kraftfahrzeugbordnetzes 1 angeordnet sind. Des Weiteren umfasst das Kraftfahrzeugbordnetz 1 einen Generator 6, Bordnetzverbraucher 7, 8, einen zweiten Energiespeicher 9, einen DC/DC-Wandler 10 und eine Sicherung 11, die jeweils in einem zweiten Bereich des Kraftfahrzeugbordnetzes 1 angeordnet sind. Weiter umfasst das Kraftfahrzeugbordnetz 1 ein erstes Schaltelement 12 und ein zweites Schaltelement 13. Das erste Schaltelement 12 umfasst zwei Schaltzustände, deren Funktionalität durch eine Diode 14 und einen parallel zur Diode 14 angeordneten Schalter 15 dargestellt werden kann. In einem ersten Schaltzustand (Schalter 15 offen) ist ein Stromfluss nur in Richtung vom ersten Bereich zum zweiten Bereich möglich (Diodenfunktion). In einem zweiten Schaltzustand (Schalter 15 geschlossen) sind der erste und der zweite Bereich durchverbunden. Das erste Schaltelement 12 kann dabei durch eine reale Diode 14 mit einem realen Schalter 15 gebildet werden oder durch mindestens einen MOSFET, dessen intrinsische Diode die Diode 14 bildet. Das zweite Schaltelement 13 weist ebenfalls zwei Schaltzustände auf. In einem ersten Schaltzustand verbindet das zweite Schaltelement 13 den ersten Energiespeicher 4 mit dem ersten Schaltelement 12. In einem zweiten Schaltzustand verbindet das zweite Schaltelement 13 den ersten Energiespeicher 4 bzw. den Starter 2 mit dem zweiten Energiespeicher 9.

Der erste Energiespeicher 4 ist als Batterie ausgebildet, die aus mehreren Batteriezellen 16 zusammengesetzt ist. Allerdings kann der erste Energiespeicher 4 auch als monolithische Batterie ausgebildet sein. Das Diagnosemodul 5 überwacht die Funktionalität des ersten Energiespeichers 4 und erfasst beispielsweise die Batteriespannung und/oder den Batteriestrom und/oder eine Batterietemperatur und ermittelt dann einen SOC/SOH des Energiespeichers 4. Das Spannungsniveau des ersten Energiespeichers 4 liegt dabei beispielsweise bei 12 V.

Der zweite Energiespeicher 9 besteht aus einem Kondensator-Pack, wobei einzelne Kondensatoren in Reihe geschaltet sind und die Reihenschaltung parallel geschaltet sind. Die Kondensatoren sind dabei vorzugsweise als Doppelschicht-Kondensatoren ausgebildet. Das Spannungsniveau des zweiten Energiespeichers 9 liegt beispielsweise bei 20 - 24 V.

Die Funktionsweise des Kraftfahrzeugbordnetzes 1 ist dabei wie folgt:

Im normalen Schaltbetrieb erfolgt die Versorgung des Starters 2 mit elektrischer Energie aus dem ersten Energiespeicher 4. Hierzu wird das erste Schaltelement 12 in den ersten Schaltzustand geschaltet und auch das zweite Schaltelement 13 in den ersten Schaltzustand geschaltet. Dies entspricht den Schalterstellungen in der Fig. 1. Wird dann der Starterschalter 3 geschlossen, so wird der Starter 2 durch den ersten Energiespeicher 4 bestromt. Dabei auftretende Spannungseinbrüche des ersten Energiespeichers 4 werden dabei durch die Diode 14 vom zweiten Bereich mit den Bordnetzverbrauchem 7, 8 entkoppelt, da dann Diode 14 sperrt. Die Versorgung der Bordnetzverbraucher 7, 8 erfolgt durch den zweiten Energiespeicher 9, dessen Spannung durch den DC/DC-Wandler 10 auf das Spannungsniveau der Bordnetzverbraucher 7, 8 abwärts gewandelt wird. Nachdem der Starter 2 einen nicht dargestellten Motor angelassen hat, kann dieser den Generator 6 antreiben. Nach erfolgtem Motorstart wird der Starterschalter 3 wieder geöffnet. Der DC/DC-Wandler 10 kann jetzt in anderer Richtung betrieben werden, sodass durch den Generator 6 der zweite Energiespeicher 9 wieder aufgeladen wird, wozu der DC/DC-Wandler 10 die Generatorspannung aufwärts wandelt. Stellt das Diagnosemodul 5 fest, dass der SOC des ersten Energiespeichers 4 abgesunken ist, so kann das erste Schaltelement 12 in den zweiten Schaltzustand geschaltet werden. Dann kann der Generator 6 den ersten Energiespeicher 4 laden.

Erfasst vor oder während eines Startvorganges das Diagnosemodul 5, dass der erste Energiespeicher 4 nicht ausreichend geladen ist oder einen anderen Defekt aufweist (z. B. Batteriekabelriss, Verbindungsabriss zwischen zwei Batteriezellen 16 etc.), so wird das zweite Schaltelement 13 in den zweiten Schaltzustand geschaltet. Dadurch ist der zweite Energiespeicher 9 direkt mit dem ersten Energiespeicher 4 und dem Starter 2 verbunden und kann den Starter 2 mit seiner hohen Spannung von ca. 20 - 24 V versorgen. Der dabei fließende hohe Starterstrom muss dabei nicht über den DC/DC-Wandler 10 fließen, sodass dieser leistungsmäßig geringer angelegt werden kann. Die Versorgung der Bordnetzverbraucher 7, 8 während des Startvorgangs erfolgt ebenfalls durch den zweiten Energiespeicher 9, wobei Spannungseinbrüche durch den DC/DC-Wandler 10 kompensiert werden.

Die Ansteuerung der Schaltelemente 12, 13 kann dabei durch das Diagnosemodul 5 und/oder ein anderes Steuergerät, wie beispielsweise ein Motorsteuergerät erfolgen.

Weiter sei angemerkt, dass es prinzipiell auch möglich ist, den ersten Energiespeicher 4 durch den zweiten Energiespeicher 9 zu laden, indem das zweite Schaltelement 13 in den zweiten Schaltzustand geschaltet wird.

Die Sicherung 11 verhindert dabei eine Überlast am DC/DC-Wandler 10. Anstelle einer Sicherung 11 kann auch ein anderes geeignetes Abschaltelement wie beispielsweise ein Leistungshalbleiterschalter oder auch ein Relais verwendet werden. Die Sicherung kann sowohl als irreversible Schmelzsicherung als auch als reversible Sicherung (PTC) ausgebildet sein.

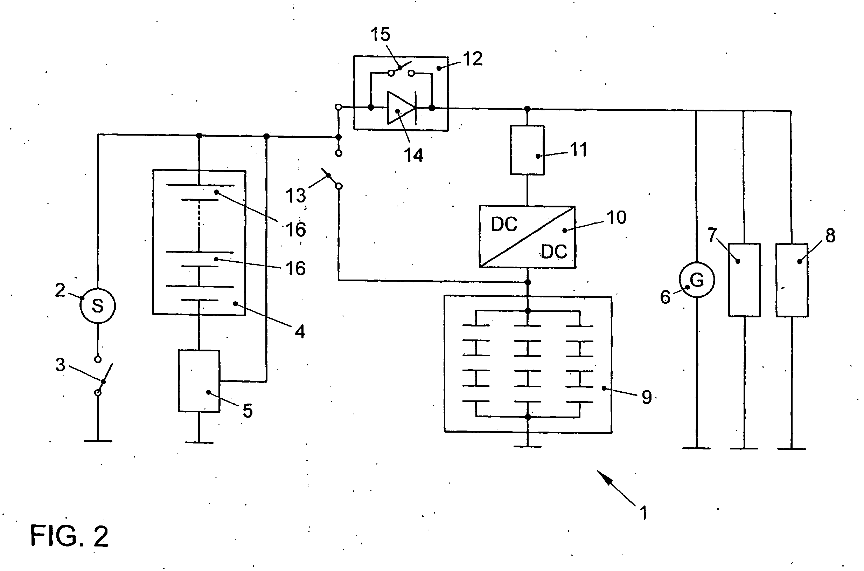

In der Fig. 2 ist ein alternatives Kraftfahrzeugbordnetz 1 dargestellt. Dabei ist die Sollspannung des zweiten Energiespeichers 9 kleiner/gleich der Sollspannung des Generators 6 und des ersten Energiespeichers 4. Das erste Schaltelement 12 ist dabei fest mit dem Starter 2 verbunden. Das zweite Schaltelement 13 liegt zwischen dem zweiten Energiespeicher 9 und dem Starter 2. Bei einem Defekt des ersten Energiespeichers 4 wird das zweite Schaltelement 13 geschlossen, so dass der zweite Energiespeicher 9 den Starter 2 bestromen kann. Der DC/DC-Wandler 10 transformiert die Spannung des zweiten Energiespeichers 9 aufwärts. Dadurch ist die Diode 14 beim Startvorgang stets in Sperrrichtung gepolt, so dass bei offenem Schalter 15 Rückwirkungen des Startvorganges auf den zweiten Bereich des Kraftfahrzeugbordnetzes 1 ausgeschlossen sind.

### Bezugszeichenliste

- 1: Kraftfahrzeugbordnetz
- 2: Starter
- 3: Starterschalter
- 4: erster Energiespeicher
- 5: Diagnosemodul
- 6: Generator
- 7: Verbraucher
- 8: Verbraucher
- 9: zweiter Energiespeicher
- 10: DC/DC-Wandler
- 11: Sicherung
- 12: erstes Schaltelement
- 13: zweites Schaltelement
- 14: Diode
- 15: Schalter
- 16: Batteriezellen

## Patentansprüche

1. Kraftfahrzeugbordnetz (1) umfassend einen Starter (2) und einen ersten Energiespeicher (4), die in einem ersten Bereich des Kraftfahrzeugbordnetzes angeordnet sind, und einen Generator (6) und einen zweiten Energiespeicher (9), die in einem zweiten Bereich des Kraftfahrzeugbordnetzes (1) angeordnet sind, wobei zwischen dem ersten und dem zweiten Bereich des Kraftfahrzeugbordnetzes (1) ein Schaltelement (12) angeordnet ist, das mindestens zwei Schaltzustände aufweist, wobei in einem ersten Schaltzustand ein Stromfluss nur in Richtung vom ersten Bereich zum zweiten Bereich möglich ist und in einen zweiten Schaltzustand der erste und zweite Bereich miteinander durchverbunden sind,
**dadurch gekennzeichnet, dass**
der zweite Energiespeicher (9) über einen DC/DC-Wandler (10) mit dem Generator (6) verbunden ist, wobei über ein zweites Schaltelement (13) der Starter (2) direkt mit dem zweiten Energiespeicher (9) verbunden ist.

2. Kraftfahrzeugbordnetz nach Anspruch 1, **dadurch gekennzeichnet, dass** eine Sollspannung des zweiten Energiespeichers (9) größer als eine Sollspannung des Generators (6) und des ersten Energiespeichers (4) ist, wobei über das zweite Schaltelement (13) der Starter (2) wahlweise mit dem ersten Schaltelement (12) oder direkt mit dem zweiten Energiespeicher (9) verbunden ist.

3. Kraftfahrzeugbordnetz nach Anspruch 1, **dadurch gekennzeichnet, dass** die Sollspannung des zweiten Energiespeichers (9) kleiner oder gleich als eine Sollspannung des Generators (6) und des ersten Energiespeichers (4) ist, wobei über ein zweites Schaltelement der zweite Energiespeicher (9) mit dem Starter (2) verbunden ist.

4. Kraftfahrzeugbordnetz nach einem der vorangegangenen Ansprüche, **dadurch gekennzeichnet, dass** der zweite Energiespeicher (9) als mindestens ein Kondensator ausgebildet ist.

5. Kraftfahrzeugbordnetz nach einem der vorangegangenen Ansprüche, **dadurch gekennzeichnet, dass** der erste Energiespeicher (4) als Batterie ausgebildet ist.

6. Kraftfahrzeugbordnetz nach einem der vorangegangenen Ansprüche, **dadurch gekennzeichnet, dass** das erste Schaltelement (12) als MOSFET ausgebildet ist.

7. Kraftfahrzeugbordnetz nach einem der vorangegangenen Ansprüche, **dadurch gekennzeichnet, dass** dem ersten Energiespeicher (4) ein Diagnosemodul (5) zugeordnet ist, in dessen Abhängigkeit das erste und/oder zweite Schaltelement (12, 13) ansteuerbar sind.

8. Kraftfahrzeugbordnetz nach einem der vorangegangenen Ansprüche, **dadurch gekennzeichnet, dass** das zweite Schaltelement (13) als galvanisch trennendes Schaltelement ausgebildet ist.

9. Kraftfahrzeugbordnetz nach einem der vorangegangenen Ansprüche, **dadurch gekennzeichnet, dass** das Kraftfahrzeugbordnetz (1) mit einem Steuergerät ausgebildet ist, mittels dessen eine Start-Stopp-Automatik ausführbar ist.

10. Verfahren zum Betreiben eines Kraftfahrzeugbordnetzes nach einem der vorangegangenen Ansprüche, **dadurch gekennzeichnet, dass** bei einem Defekt des ersten Energiespeichers (4) mittels des zweiten Schaltelementes (13) der Starter (2) direkt mit dem zweiten Energiespeicher (9) verbunden wird und die Startenergie durch den zweiten Energiespeicher (9) geliefert wird.

## Claims

1. Motor vehicle electrical system (1) comprising a starter (2) and a first energy store (4) which are arranged in a first region of the motor vehicle electrical system, and comprising a generator (6) and a second energy store (9) which are arranged in a second region of the motor vehicle e electrical system (1), wherein a switching element (12) which has at least two switching states is arranged between the first and the second region of the motor vehicle electrical system (1), wherein current flow is possible only in the direction from the first region to the second region in a first switching state and the first and the second region are through-connected to one another in a second switching state,
**characterized in that**
the second energy store (9) is connected to the generator (6) by means of a DC/DC converter (10), wherein the starter (2) is connected directly to the second energy store (9) by means of a second switching element (13).

2. Motor vehicle electrical system according to Claim 1, **characterized in that** a setpoint voltage of the second energy store (9) is greater than a setpoint voltage of the generator (6) and of the first energy store (4), wherein the starter (2) is connected selectively to the first switching element (12) or directly to the second energy store (9) by means of the second switching element (13).

3. Motor vehicle electrical system according to Claim 1, **characterized in that** the setpoint voltage of the second energy store (9) is lower than or equal to a setpoint voltage of the generator (6) and of the first energy store (4), wherein the second energy store (9) is connected to the starter (2) by means of a second switching element.

4. Motor vehicle electrical system according to one of the preceding claims, **characterized in that** the second energy store (9) is in the form of at least one capacitor.

5. Motor vehicle electrical system according to one of the preceding claims, **characterized in that** the first energy store (4) is in the form of a battery.

6. Motor vehicle electrical system according to one of the preceding claims, **characterized in that** the first switching element (12) is in the form of a MOSFET.

7. Motor vehicle electrical system according to one of the preceding claims, **characterized in that** the first energy store (4) has an associated diagnosis module (5) as a function of which the first and/or second switching element (12, 13) can be actuated.

8. Motor vehicle electrical system according to one of the preceding claims, **characterized in that** the second switching element (13) is in the form of an electrically isolating switching element.

9. Motor vehicle electrical system according to one of the preceding claims, **characterized in that** the motor vehicle electrical system (1) is formed with a controller by means of which an automatic start/stop system can be implemented.

10. Method for operating a motor vehicle electrical system according to one of the preceding claims, **characterized in that**, in the event of a defect in the first energy store (4), the starter (2) is connected directly to the second energy store (9) by means of the second switching element (13) and the starting energy is provided by the second energy store (9).

## Revendications

1. Réseau de bord de véhicule à moteur (1) comprenant un démarreur (2) et un premier accumulateur d'énergie (4), qui sont disposés dans une première zone du réseau de bord de véhicule à moteur, et un générateur (6) et un deuxième accumulateur d'énergie (9) qui sont disposés dans une deuxième zone du réseau de bord de véhicule à moteur (1), dans lequel il est prévu, entre les première et deuxième zones du réseau de bord de véhicule à moteur (1), un élément de commutation (12) qui présente au moins deux états de commutation, dans lequel, dans un premier état de commutation, un flux de courant n'est possible que dans une direction allant de la première zone à la deuxième zone et, dans un deuxième état de commutation, les première et deuxième zones sont interconnectées l'une à l'autre,
**caractérisé en ce que** le deuxième accumulateur d'énergie (9) est relié au générateur (6) par l'intermédiaire d'un convertisseur continu/continu (10), dans lequel le démarreur (2) est directement relié au deuxième accumulateur d'énergie (9) par l'intermédiaire d'un deuxième élément de commutation (13).

2. Réseau de bord de véhicule à moteur selon la revendication 1, **caractérisé en ce qu'**une tension nominale du deuxième accumulateur d'énergie (9) est supérieure à une tension nominale du générateur (6) et du premier accumulateur d'énergie (4), dans lequel le démarreur (2) est relié de manière sélective au premier élément de commutation (12) ou directement au deuxième accumulateur d'énergie (9) par l'intermédiaire du deuxième élément de commutation (13).

3. Réseau de bord de véhicule à moteur selon la revendication 1, **caractérisé en ce que** la tension nominale du deuxième accumulateur d'énergie (9) est inférieure ou égale à une tension nominale du générateur (6) et du premier accumulateur d'énergie (4), dans lequel le deuxième accumulateur d'énergie (9) est relié au démarreur (2) par l'intermédiaire d'un deuxième élément de commutation.

4. Réseau de bord de véhicule à moteur selon l'une quelconque des revendications précédentes, **caractérisé en ce que** le deuxième accumulateur d'énergie (9) est réalisé sous la forme d'au moins un condensateur.

5. Réseau de bord de véhicule à moteur selon l'une quelconque des revendications précédentes, **caractérisé en ce que** le premier accumulateur d'énergie (4) est réalisé sous la forme d'une batterie.

6. Réseau de bord de véhicule à moteur selon l'une quelconque des revendications précédentes, **caractérisé en ce que** le premier élément de commutation (12) est réalisé sous la forme d'un MOSFET.

7. Réseau de bord de véhicule à moteur selon l'une quelconque des revendications précédentes, **caractérisé en ce qu'**un module de diagnostic (5) est associé au premier accumulateur d'énergie (4), en fonction duquel le premier et/ou le deuxième élément de commutation (12, 13) peut ou peuvent être commandé(s).

8. Réseau de bord de véhicule à moteur selon l'une quelconque des revendications précédentes, **caractérisé en ce que** le deuxième élément de commutation (13) est réalisé sous la forme d'un élément de commutation à séparation galvanique.

9. Réseau de bord de véhicule à moteur selon l'une quelconque des revendications précédentes, **caractérisé en ce que** le réseau de bord de véhicule à moteur (1) est réalisé sous la forme d'un appareil de commande au moyen duquel un système de démarrage-arrêt automatique peut être mis en oeuvre.

10. Procédé de mise en fonctionnement d'un réseau de bord de véhicule à moteur selon l'une quelconque des revendications précédentes, **caractérisé en ce que**, lors d'un défaut du premier accumulateur d'énergie (4), le démarreur (2) est directement relié au deuxième accumulateur d'énergie (9) au moyen du deuxième élément de commutation (13) et l'énergie de démarrage est délivrée par le deuxième accumulateur d'énergie (9).
